# EUROPEAN PATENT APPLICATION

(11) **EP 0 845 403 A2**
(43) Date of publication of application: **03.06.1998**
(21) Application number: 97118171.4
(22) Date of filing: 20.10.1997
(51) Int. Cl.: B62D 13/06, B62D 7/14

(54) **A power-assisted steering system for the self-steering wheels of one or more rear axles of a motor vehicle such as a truck, trailer and semi-trailer for steering the vehicle during backing**

(30) Priority: 31.10.1996 IT BO960552
(71) Applicant: R.C.D. S.r.l., 40069 Zola Predosa (Bologna) (IT)
(72) Inventor: Biondi, Armando, 40010 Sala Bolognese (Prov. of Bologna) (IT)
(74) Representative: Modiano, Guido, Dr.-Ing.

(57) **Abstract**

A system for steering, during backing, the self-steering wheels (3, 4) of at least a rear axle (27) of a motor vehicle equipped with power-assisted steering on a front axle (7), comprising a double-action hydraulic actuator (31) which acts on the self-steering rear wheels (3, 4) and is connected to a hydraulic pressure source (37, 38) by a servocontrolled distributor (44) which is actuated by a traction element of the flexible-cable type (47), which is connected to the steering system (13-15) of the front axle (7) so as to direct the rear wheels (3, 4) in the steering direction and by the desired extent in proportion to the steering of the front wheels (1, 2).

## Description

The present invention relates to an improvement to a power-assisted steering system for the self-steering wheels of one or more rear axles of a vehicle such as a truck, trailer and semitrailer.

The invention is meant to be applied in steering during backing maneuvers of the vehicle.

vehicles are currently commercially available in which the front axle has power-assisted steering and in which there are provided two rear axles, one of which is often of the self-steering kind.

Italian patent Applications no. BO92A000327, BO94A000479, BO95A000029, BO96A000027 disclose systems for steering, both during forward travel and during backing, one or more rear axles provided with steered or self-steering wheels for trucks, trailers and semitrailers.

Vehicles provided with rear axles with self-steering wheels, i.e., with wheels which automatically follow the steering of the front wheels along the towing curve, currently cannot perform backing because the rear wheels cannot follow the towing curve. In this case it is necessary to first lock the self-steering rear axle so that the wheels are in the straight travel position.

The aim of the present invention is to provide a power-assisted steering system which maintains the normal behavior of the self-steering axle when the vehicle travels forward and allows, during backing maneuvers, to steer the rear axle proportionally to the steering of the front axle.

Within the scope of this aim, an object of the present invention is to reduce, during backing maneuvers, the steering radius, improve the maneuverability of the vehicle and reduce tire wear.

Another object of the present invention is to provide a system which is structurally simple and highly reliable in operation.

This aim, these objects and others which will become apparent hereinafter are achieved with a system for steering, during backing, the self-steering wheels of at least a rear axle of a motor vehicle equipped with power-assisted steering on a front axle, characterized in that it comprises a double-action hydraulic actuator which acts on said self-steering rear wheels and is connected to a hydraulic pressure source by a servocontrolled distributor actuated by a traction element of the flexible-cable type, which is connected to the steering system of the front axle so as to direct said rear wheels in the steering direction and by the desired extent in proportion to the steering of the front wheels.

Further characteristics and advantages of the present invention will become apparent from the following detailed description on the basis of the accompanying drawings, wherein:
figure 1 is a schematic plan view of a vehicle provided with a rear axle with self-steering wheels, according to the present invention;
figure 2 is an enlarged-scale view of the rear axle with self-steering wheels; and
figure 3 is a view of a second embodiment of the present invention.

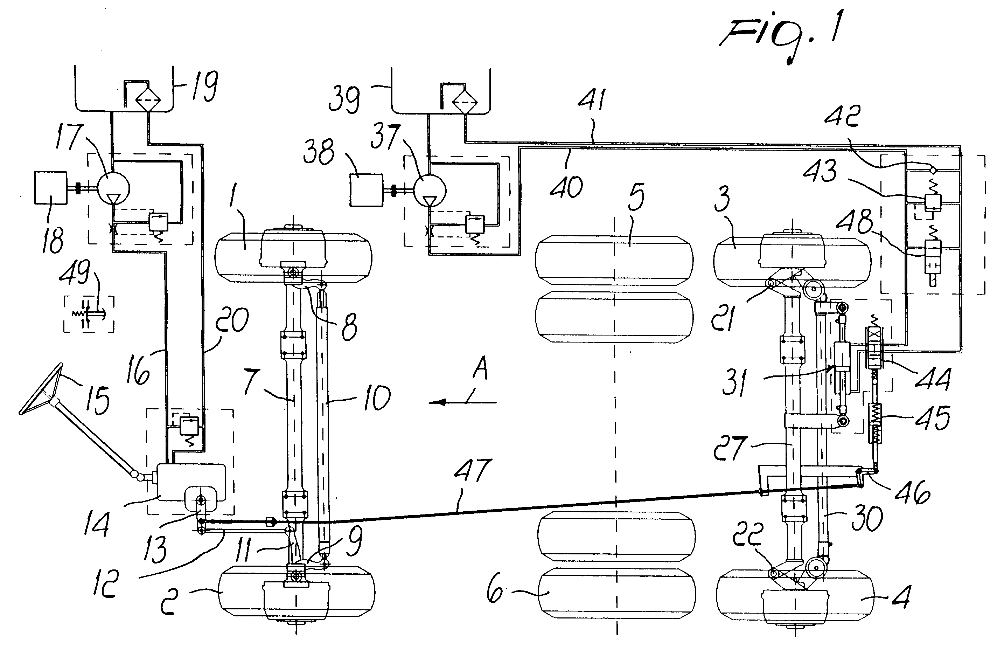

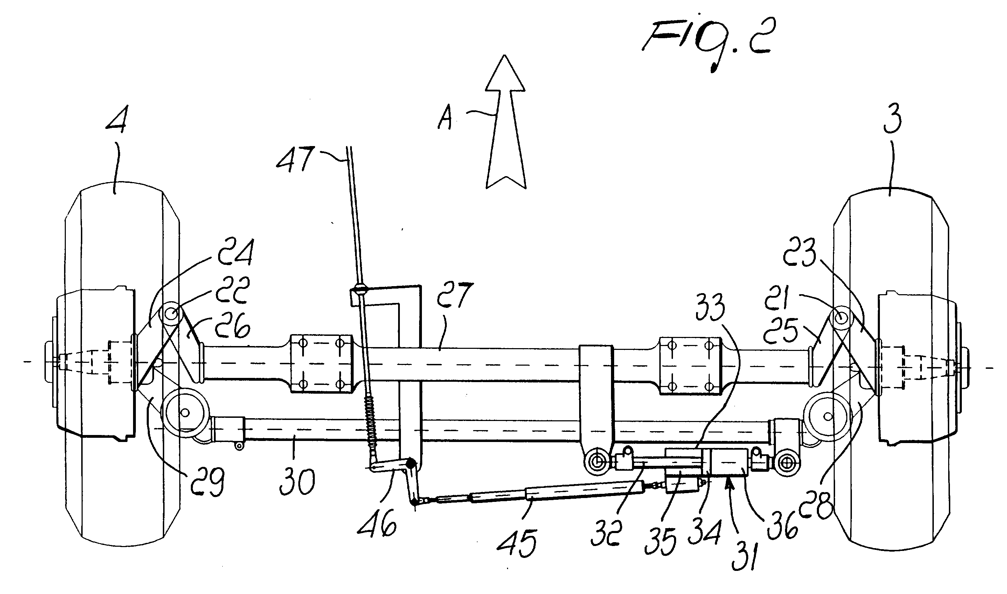

With reference to figures 1 and 2, the reference numerals 1 and 2 designate the two leading wheels of a motor vehicle equipped with power-assisted steering on the front axle and the numerals 3 and 4 designate the rear self-steering wheels, which are arranged behind two respective non-steering wheels 5 and 6.

The wheels 1, 2 are mounted on an axle 7 and can steer by means of a conventional four-sided linkage composed of two arms 8 and 9 articulately connected to each other by a transverse bar 10. A second arm 11 is rigidly coupled to the arm 9 and is connected by means of a traction element 12 to an actuation lever 13 of a hydraulic steering system, which is generally designated by the reference numeral 14 and is capable of causing the oscillation of the lever 13 in one direction or the other when the steering wheel 15 is operated.

The hydraulic steering system 14 is connected to a delivery 16 of an oil feed pump 17 which is driven by a motor 18 and draws oil from a reservoir 19. The oil returns to the reservoir 19 along a return duct 20.

Conventionally, in order to make the wheels 3 and 4 self-steering, these wheels are articulated at two pivots 21 and 22 which are shifted forward (i.e., in the travel direction A of the vehicle) with respect to the rotation axis of the wheels 3, 4. In practice, the wheels 3, 4 have two arms 23, 24 which protrude forward and are articulated by the pivots 21, 22 to two arms 25, 26 which are fixed to the opposite ends of the axle 27 that supports the wheels.

The arms 23, 24 are rigidly coupled to respective levers 28, 29 which are mutually connected by a bar 30 which forms, together with them, a four-sided linkage system for steering the rear wheels 3, 4 which allows said wheels to self-orientate along the towing curve set by the front wheels.

In order to have positive control over the steering angle of the rear wheels during backing, there is provided a double-action jack 31 provided with a stem 32 articulated to the axle 27 and a cylinder 33 which is articulated to a bar 30; in said cylinder, the piston 34 forms two chambers 35, 36 into which pressurized oil is fed in order to orientate the steered wheels 3, 4 in one direction or the other.

The pressurized oil for actuating the rear self-steering wheels is supplied by an additional pump 37, which is actuated by an independent motor 38 (of the internal-combustion or electric type), which draws the oil from a reservoir 39 and, by means of a delivery duct 40, sends it to the jack 31. A distributor 44 of the two-way, three-position type is arranged between the delivery duct 40 and a return duct 41 which returns the oil to the reservoir 39, in addition to an anticavitation valve 42 and to a pressure limiting valve 43. The distributor 44 is installed on the jack 31 and has a slide valve which, by means of an extendable rod 45, is connected to the end of an L-shaped transmission lever 46 which is pivoted to the chassis of the vehicle. The opposite end of the transmission lever 46 is connected, by a traction element of the flexible-cable type 47, to the lever 13 of the hydraulic steering system 14. An electric valve 48 is interposed between the ducts 40 and 41 and is controlled by a sensor 49; the valve has the purpose of hydraulically disengaging the distributor 44 when the rear wheels 3, 4 must remain self-steering.

The sensor 49 can be a switch which is operated by the driver of the vehicle or associated with the backing control, so as to move the electric valve 48 into the position wherein the connection between the delivery duct 40 and the return duct 41 is closed and the pressurized oil fed by the pump 37 can actuate the jack 31 in the direction that corresponds to the position assumed by the distributor 44.

The rod 45 is for example of the type with preloaded springs, such as to make said rod normally rigid but allow extension thereof both under traction and under compression in order to allow the lever 13 to oscillate even if the rear self-steering wheels 3 and 4 are blocked.

The rotation of the steering wheel 15 causes, by means of the lever 13, the flexible-cable traction element 47 and the extendable rod 45, a movement of the slide valve of the distributor 44 in the direction in which the supply of oil to the jack 31 causes a corresponding steering effect of the rear wheels 3, 4.

Steering of the rear self-steering wheels is actuated only during the backing of the vehicle, when the sensor 49 activates the electric valve 48 from the normal position, in which it bypasses the distributor 44, to the position in which it makes it possible to use the hydraulic energy of the pump 37, connecting the delivery 40 to the chamber 35 or 36 depending on the shift undergone by the distributor 44.

Control of the steering of the rear self-steering wheels during backing maneuvers occurs by means of the steering wheel 15, and the steering angle of the rear wheels is proportional to the steering angle of the front wheels, taking into account the leverage ratios which are present in the actuation of the distributor by means of the flexible-cable traction element 47.

During operation in forward travel, the sensor 49 keeps the electric valve 48 deactivated, so that the delivery 40 of the pump 37 is connected to the return duct 41 in the reservoir 39 and the self-steering rear axle has the natural behavior of a towed rear axle.

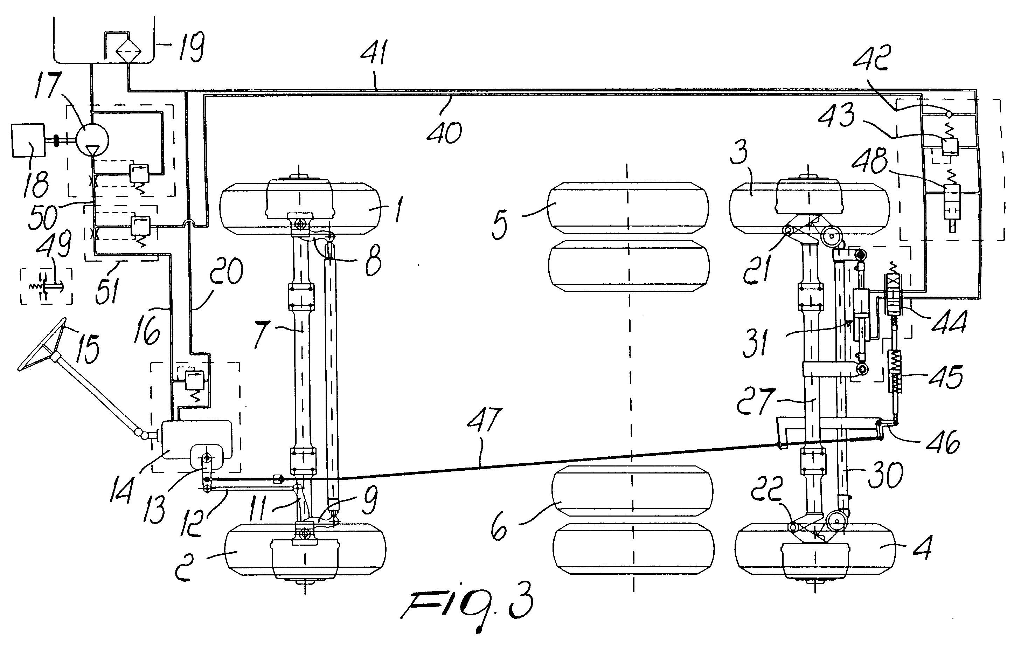

The above-described invention is susceptible of numerous modifications and variations, all of which are within the scope of the same inventive concept. For example, figure 3 illustrates a solution in which the pressurized liquid for actuating the jack 31 is supplied by the pump 17 through a duct 50 and a flow splitter valve 51, which divides the flow and supplies with a constant flow-rate the hydraulic steering system 14 with the duct 16 and the jack 31 with the duct 40. In this way it is possible to use the same pump 17 that supplies the hydraulic steering system 14.

According to a different embodiment of the invention, the pump 37 can be actuated by the motor itself of the vehicle by means of a suitable transmission.

A substantial advantage of the invention is constituted by the fact that the flexible-cable traction element, being an inextensible mechanical element, ensures simultaneousness of the position of the front steered wheels and of the rear wheels throughout the steering maneuver.

Moreover, the system allows to compensate for the steering angle of the rear wheels that corresponds to the angle set with the front wheels if the rear wheels, for any reason (for example by placing themselves against an obstacle during backing), arrange themselves at a different angle due to a momentary opening of the pressure limiting valve 43 caused by an increase in pressure on the duct 40 above the set value of the valve 43.

Recovery of the steering angle also occurs if the front steered wheels are steered before inserting the reverse gear, i.e., before the activation of the switch 49.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system for steering, during backing, the self-steering wheels (3, 4) of at least a rear axle (27) of a motor vehicle equipped with power-assisted steering on a front axle (7), characterized in that it comprises a double-action hydraulic actuator (31) which acts on said self-steering rear wheels (3, 4) and is connected to a hydraulic pressure source (37-38) by a servocontrolled distributor (44) actuated by a traction element of the flexible-cable type (47), which is connected to the steering system (13-15) of the front axle (7) so as to direct said rear wheels (3, 4) in the steering direction and by the desired extent in proportion to the steering of the front wheels (1, 2).

2. A system according to claim 1, characterized in that it comprises an articulated four-sided linkage system (28-30) for the steering of said rear wheels (3,4) which is composed of a bar (30) parallel to the rear axle (27) and the ends of which are articulated to arms (28, 29) which are rigidly coupled to the rear wheels (3, 4), and in that said hydraulic actuator (31) is constituted by a hydraulic jack (31) which acts on said steering four-sided linkage element (28-30) and is provided with a piston (34) which forms two chambers (35, 36) which are connected to the delivery (40) and respectively to the return (41) of a pump (37, 38) for feeding pressurized oil through a two-way, three-position distributor (44) controlled by the power-assisted steering system (14) of the front axle (7) of the vehicle by means of said flexible-cable traction element (47).

3. A system according to claim 2, characterized in that an extendable rod (45) is connected to the flexible-cable traction element (47) and allows to actuate the lever (13) of the hydraulic steering system (14) of the front axle (7) even when the wheels (3, 4) of the rear self-steering axle (27) are blocked.

4. A system according to claim 2, characterized in that a single pump (17) is provided to supply both the hydraulic circuit of the rear axle (27) and the hydraulic circuit of the front axle (7), with the insertion of a flow splitter valve (51) on a delivery duct (50).

5. A system according to claim 4, characterized in that for the supply of the hydraulic circuit of the rear axle (27) there is provided a pump (37) which is actuated by an internal-combustion or electric motor (38) or by the motor of the vehicle itself.

6. A system according to claim 2, characterized in that said distributor (44) is connected to a control lever (13) of the front steering wheels (1, 2) by a transmission comprising a flexible-cable traction element (47) and an extendable rod (45) which is adapted to store the angular steering position of the wheels (1,2) of the front axle (7) and to ensure that synchronization between the angular position of the wheels (3, 4) of the rear axle (27) and the angular position of the wheels of the front axle (7) is achieved and maintained during backing of the vehicle.
